(19) **Europäisches Patentamt**

**European Patent Office**

**Office européen des brevets**

(11) **EP 0 785 438 B1**

(12) **EUROPÄISCHE PATENTSCHRIFT**

(45) Veröffentlichungstag und Bekanntmachung des Hinweises auf die Patenterteilung:
**02.05.2001  Patentblatt 2001/18**

(51) Int Cl.[7]: **G01P 21/02**

(21) Anmeldenummer: **96120233.0**

(22) Anmeldetag: **17.12.1996**

(54) **Verfahren zur Ermittlung des Kalibrierungsfaktors eines Tachometers unter Verwendung der Signale eines Beschleunigungssensor**

Method for determining the calibration factor of a tachometer using the output signal of an accelerometer

Méthode de détermination du facteur de calibration d'un tachymètre utilisant les signaux d'un accéléromètre

(84) Benannte Vertragsstaaten:
**AT CH DE FR GB LI SE**

(30) Priorität: **17.01.1996  DE 19604441**

(43) Veröffentlichungstag der Anmeldung:
**23.07.1997  Patentblatt 1997/30**

(73) Patentinhaber: **Mannesmann VDO AG 60326 Frankfurt (DE)**

(72) Erfinder:
• **Hertzner, Alfred, Dr.-Dipl.-Phys. 78089 Unterkirnach (DE)**
• **Gutsch, Werner, Dipl-Phys. 78126 Königsfeld (DE)**

(56) Entgegenhaltungen:
**WO-A-90/15337          WO-A-94/06100 US-A- 4 074 196**

**Beschreibung**

Die Erfindung betrifft ein Verfahren zur Ermittlung der Wegimpulszahl eines Tachometergebers unter Verwendung der Daten eines Beschleunigungsgebers nach dem Oberbegriff des ersten Anspruchs.

Der Tachometergeber eines Fahrzeugs ist üblicherweise als ein Impulsgeber ausgebildet, der zur Fahrzeuggeschwindigkeit proportionale Impulsfolgen generiert, indem er die Wechselfrequenz von Zahnkopf und Zahnlücke eines rotierenden Getriebezahnrades erfaßt. Zur betragsmäßigen Ableitung der Fahrzeuggeschwindigkeit v aus der Anzahl p der pro Zeiteinheit t erfaßten Impulse ist es notwendig, die ermittelte Impulszahl p(t) mit der sogenannten Wegimpulszahl w zu multiplizieren, wobei die Wegimpulszahl w als das Verhältnis der auf einer Strecke $\Delta$s gezählten Impulse $\Delta$p des Tachometergebers definiert ist. Die Wegimpulszahl w wird meist in Impulse/km angegeben.

Die Wegimpulszahl w ist eine von der Gestaltung des dem Abgriff zugrunde liegenden Zahnrades sowie von Parametern der abrollenden Reifen, wie Luftdruck und Abnützung, abhängige Größe, die individuell für jedes Fahrzeug ermittelt werden muß und zudem infolge der genannten Einflußgrößen nicht konstant ist. Die Ermittlung der Wegimpulszahl w erfolgt üblicherweise bei der Installation des im Fahrzeug mit dem Tachometergeber verbundenen Registriergerätes, wobei die Wegimpulszahl w im Gerät als Parameter zur Verarbeitung von Meßwerten manuell eingestellt wird. Diese Vorgehensweise birgt die Gefahr von fehlerhaften Einstellungen, so daß es in deren Folge zu falschen Geschwindigkeitsanzeigen und/oder Geschwindigkeitsregistrierungen kommen kann.

Aus WO-A-94/06100 ist ein Verfahren bekannt, nach dem eine Wegimpuls-Sensoreinheit und ein Beschleunigungssensor jeweils Signale liefern, aus denen sich Umrechnungsparameter berechnen lassen, welche eine quasikontinuierliche Eichung ermöglichen.

Für ein Fahrzeugdatenregistriergerät, das mit einem Beschleunigungsgeber zur Erfassung der Fahrzeugbeschleunigung in dessen Längsrichtung parallel zur Fahrbahnoberfläche ausgestattet ist, soll nun ein Verfahren zur Ermittlung der Wegimpulszahl eines Tachometergebers unter Verwendung der Daten des Beschleunigungsgebers aufgezeigt werden, um die erwähnten, auf die Wegimpulszahl einwirkenden Störquellen zu eliminieren.

Die Aufgabe wird durch die Merkmale des ersten Anspruchs gelöst. Die abhängigen Ansprüche zeigen vorteilhafte Ausgestaltungen der gefundenen Lösung.

Die gefundene Lösung hat den Vorteil, daß durch die geräteinterne, also selbsttätig vom Gerät ausgeführte Ermittlung der Wegimpulszahl solche Fehler vermieden werden, die bei einer manuell durchgeführten Parametrierung des Gerätes nie ausgeschlossen werden können. Auch ist es nicht erforderlich, bei der Installation des Registriergerätes in das Fahrzeug die Wegimpulszahl durch Abrollen einer bestimmten Wegstrecke zu ermitteln. Hierdurch wird erheblicher Aufwand gespart. Überdies üben veränderliche Werte der Reifenparameter keinen nachteiligen Einfluß auf die zu ermittelnde Fahrzeuggeschwindigkeit aus, da die zur Berechnung der Fahrzeuggeschwindigkeit erforderliche Wegimpulszahl während des Betriebs des Fahrzeugs stets aktualisiert wird.

Das vorgeschlagene Verfahren hat zudem den ganz besonderen Vorteil, daß es Störeinflüsse auf die erfaßten Beschleunigungswerte durch die Fahrzeugdynamik und die Fahrbahntopologie dadurch kompensiert, daß es stets nur die Meßwerte kürzerer Fahrtphasen auswertet, während denen die topografischen und fahrzeugdynamischen Einflüsse als annähernd konstant betrachtet werden können. Außerdem läßt sich das vorgeschlagene Verfahren mit vergleichsweise geringem Rechenaufwand realisieren, was bei einem Fahrzeugdatenregistriergerät eine unabdingbare Forderung ist. Mit zunehmender Fahrtzeit t verbessert sich die Genauigkeit des durch die Mittelwertbildung ermittelten Wertes für die Wegimpulszahl $\overline{w}$. Es hat sich als vorteilhaft erwiesen, den Mittelwert $\overline{w}$ über eine Anzahl i von mehr als N = 1000 Einzelberechnungen zu bilden. Im Registriergerät können dann zur Kontrolle zB k = 3 dieser Mittelwerte $\overline{w}$ gespeichert werden, die zyklisch überschrieben werden.

Zur Ausführung der Erfindung empfiehlt es sich, sowohl die kontinuierlich mit dem Beschleunigungsgeber erfaßte Längsbeschleunigung $a_l$ des Fahrzeugs als auch die fortlaufend vom Tachometergeber abgegebene Impulsfolge p(t) mit einer Frequenz von zB 2 Hz auszuwerten. Gute Ergebnisse werden erzielt, wenn zur Differentiation auf die Beschleunigungswerte $a_l$ ein 21-Punkte-Savitzky-Golay-Filter und auf die Impulse p(t) zunächst eine zweifache Differentiation mittels eines 5-Punkte-Savitzky-Golay-Filters und dann in einem zweiten Schritt eine einfache Differentiation mittels eines 17-Punkte-Savitzky-Golay-Filters angewandt wird. Dabei sind die Filterparameter sorgfältig auszuwählen. Erläuterungen zur Berechnung der Parameter finden sich zB auf den Seiten 644 bis 649 in dem Buch von W.H. Press, S.A. Teukolsky, W.T. Vetterling und B.P. Flannery: Numerical Recipes, Second Edition, Cambridge University Press, Cambridge 1992.

Falls der betragsmäßige Wert

$$\left| \frac{da_l(t)}{dt} \right|$$

der der Differentiation unterzogenen Beschleunigung oberhalb eines zuvor festgelegten Schwellwertes $r_O$ liegt, soll die Wegimpulszahl w nach folgender Formel berechnet werden:

$$\frac{da_l(t)}{dt} = \frac{1000}{w} \times \frac{d^3p(t)}{dt^3}$$

Das gefundene Verfahren sieht vor, daß die so ermittelten Wegimpulswerte $w_i$ (mit i = 1 bis N für die Anzahl der Wegimpulswertbestimmungen) aufsummiert und gemittelt werden. Als Schwellwert für die Entscheidung, ob die Wegimpulszahl w aus der oben genannten Gleichung ermittelt werden soll, hat sich $r_O$ = 0,1 m/s$^3$ als vorteilhaft erwiesen. Für die Mittelwertbildung aus den ermittelten Wegimpulszahlen w; empfiehlt sich ein Vorgehen nach der Gleichung

$$\overline{w} = \frac{1}{N} \sum_{i=1}^{N} w_i ,$$

wobei i die einzelnen Wegimpulswerte durchnumeriert und N die Anzahl der berechneten Wegimpulswerte bezeichnet. Mehrere gemittelte Wegimpulszahlen $\overline{w}$ können im Registriergerät zum besseren Nachvollziehen der Entwicklung der Werte der Wegimpulszahlen gespeichert und zyklisch überschrieben werden, wobei eine Anzahl von k = recht nützlich ist.

Beispielhaft soll nachstehend ein C-Listing zur Durchführung des Verfahrens angegeben werden. Danach ergibt sich folgendes zur Bestimmung der Savitzky-Golay-Filter:

```
void diff_17pkte(int n,double*t,double*y, Double *yp)
  /*--------------------------------------------------------------------
      Berechnet yp = dy/dt mittels 17-Pkte.-Formel
      nr = nl = 8 ; Grad = 1
      an den Stellen  ( t[i],y[i] ) i = 0..n-1 */
  {
    int i,j;
    double c[17];


      c[ 0] = -0.019607843137;
      c[ 1] = -0.017156862745;
      c[ 2] = -0.014705882353;
      c[ 3] = -0.012254901961;
      c[ 4] = -0.009803921569;
      c[ 5] = -0.007352941176;
      c[ 6] = -0.004901960784;
      c[ 7] = -0.002450980392;
      c[ 8] = 0.0;
      c[ 9] = 0.002450980392;
      c[10] = 0.004901960784;
      c[11] = 0.007352941176;
      c[12] = 0.009803921569;
      c[13] = 0.012254901961;
      c[14] = 0.014705882353;
      c[15] = 0.017156862745;
      c[16] = 0.019607843137;


  for(i = 8;i < n-8;i + +)
      {
        yp[i]  = 0;
        for(j = 0;j < 17;j + +) yp[i] + =  c[j]*y[i-8 + j];

        yp[i] = yp[i]/(t[i]-t[i-1]);
      }//i

    //die Ränder  = 0 !!!!!

      for(i = 0;i < 8;i + +)
      {
        yp[i] = 0;
        yp[n-1-i] = 0;
      }
  }  //_____
```

```
void diff_21pkte(int n,double*t,double*y, Double *yp)
/*--------------------------------------------------------------------------
    Berechnet yp = dy/dt mittels 11-Pkte.-Formel
    nl = nr = 10 ; Grad = 1
    an den Stellen  ( t[i],y[i] ) i = 0..n-1 */
{
  int i,j;
  double c[21];


    c[ 0] = -0.012987012987;
    c[ 1] = -0.011688311688;
    c[ 2] = -0.010389610390;
    c[ 3] = -0.009090909091;
    c[ 4] = -0.007792207792;
    c[ 5] = -0.006493506494;
    c[ 6] = -0.005194805195;
    c[ 7] = -0.003896103896;
    c[ 8] = -0.002597402597;
    c[ 9] = -0.001298701299;
    c[10] =   0.0;
    c[11] =   0.001298701299;
    c[12] =   0.002597402597;
    c[13] =   0.003896103896;
    c[14] =   0.005194805195;
    c[15] =   0.006493506494;
    c[16] =   0.007792207792;
    c[17] =   0.009090909091;
    c[18] =   0.010389610390;
    c[19] =   0.011688311688;
    c[20] =   0.012987012987;


for(i = 10;i < n-10;i++)
    {
      yp[i]  = 0;
      for(j = 0;j < 21;j++) yp[i] += c[j]*y[i-10+j];

      yp[i] = yp[i]/(t[i]-t[i-1]);
    }//i

  //die Ränder  = 0 !!!!!

    for(i = 0;i < 10;i++)
    {
      yp[i] = 0;
      yp[n-1-i] = 0;
    }
}  //_____
```

```
void diff2_5pkte(int n,double*t,double*y, Double *ypp)
  /*-------------------------------------------------------------
    Berechnet yp = d^2y/dt^2 mittels 5-Pkte.-Formel
    nl = nr = 2; Grad = 2
    an den Stellen  ( t[i],y[i] ) i  =  0..n-1 */
  {
    int i,j;
    double c[5];


    c[ 0] =  0.1428571429;
    c[ 1] = -0.0714285714;
    c[ 2] = -0.1428571429;
    c[ 3] = -0.0714285714;
    c[ 4] =  0.1428571429;


    for(i = 2;i < n-2;i + +)
    {
      ypp[i]  =  0;
      for(j = 0;j < 5;j + +) ypp[i] + =  c[j]*y[i-2 + j];

      ypp[i] = 2*ypp[i]/(t[i]-t[i-1])/(t[i + 1]-t[i]);
    }//i

  //die Ränder   = 0 !!!!!

    for(i = 0;i < 2;i + +)
    {
      ypp[i] = 0;
      ypp[n-1-i] = 0;
    }
  }   //_____
```

**Patentansprüche**

1. Verfahren zur Ermittlung der Wegimpulszahl eines Tachometergebers unter Verwendung der Daten eines Beschleunigungsgebers, wobei der Tachometergeber im Fahrzeug mit einem Fahrzeugdatenregistriergerät verbunden ist, der Tachometergeber zur Fahrzeuggeschwindigkeit proportionale Impulsfolgen generiert und das Fahrzeugdatenregistriergerät mit einem Beschleunigungsgeber zur Erfassung der Fahrzeugbeschleunigung in dessen Längsrichtung parallel zur Fahrbahnoberfläche ausgestattet ist,
   **dadurch gekennzeichnet,**

   a. daß auf die erfaßten Meßwerte der Beschleunigung $a_l(t)$ in Längsrichtung des Fahrzeugs eine einfache Differentiation und auf die vom Tachometergeber abgegebenen Impulsfolgen p(t) eine dreifache Differentiation angewandt wird,
   b. daß die Wegimpulszahl w dann jeweils aus der Gleichung

$$\frac{da_l(t)}{dt} = \frac{1000}{w} \times \frac{d^3p(t)}{dt^3}$$

ermittelt wird, wenn der betragsmäßige Wert

$$\left|\frac{da_l(t)}{dt}\right|$$

größer als ein vorgegebener Schwellwert $r_O$ ist,
c. und daß die so ermittelten Wegimpulswerte $w_i$ mit i = 1 bis N für die Anzahl der Wegimpulswertbestimmungen akkumuliert und gemittelt werden.

2. Verfahren nach Anspruch 1, **dadurch gekennzeichnet,**
daß als Schwellwert $r_O$ = 0,1 m/s$^3$ festgelegt ist.

3. Verfahren nach einem der vorangegangenen Ansprüche, **dadurch gekennzeichnet,**
daß die Mittelwertbildung aus den ermittelten Wegimpulszahlen $w_i$ nach der Gleichung

$$\overline{w} = \frac{1}{N} \sum_{i=1}^{N} w_i$$

erfolgt, wobei i die einzelnen Wegimpulswerte durchnumeriert und N die Anzahl der berechneten Wegimpulswerte bezeichnet.

4. Verfahren nach einem der vorangegangenen Ansprüche, **dadurch gekennzeichnet,**
daß im Registriergerät eine Anzahl k der gemittelten Wegimpulszahlen gespeichert und zyklisch überschrieben wird.

5. Verfahren nach einem der vorangegangenen Ansprüche, **dadurch gekennzeichnet,**
daß die Differentiationen der Meßwerte, die als Beschleunigung $a_l(t)$ in Längsrichtung des Fahrzeugs und als Impulsfolgen p(t) vom Tachometergeber erfaßt werden, mit einem Savitzky-Golay-Filter durchgeführt werden.


**Claims**

1. Method for determining the distance pulse factor from a tachogenerator using data from an accelerometer, with the tachogenerator in the vehicle being connected to a vehicle data recording appliance, the tachogenerator generating pulse strings proportional to the vehicle speed, and the vehicle data recording appliance being equipped with an accelerometer for detecting the vehicle acceleration in its longitudinal direction parallel to the roadway surface,
**characterized**

a. in that the detected measured values of the acceleration $a_l(t)$ in the longitudinal direction of the vehicle are subjected to single differentiation, and the pulse strings p(t) emitted from the tachogenerator are subjected to triple differentiation,
b. in that the distance pulse factor w is then in each case determined from the equation

$$\frac{da_l(t)}{dt} = \frac{1000}{w} \times \frac{d^3p(t)}{dt^3}$$

if the magnitude of the value

$$\left|\frac{da_l(t)}{dt}\right|$$

is greater than a predetermined threshold value $r_0$

c. and in that the distance pulse values $w_i$, where $i = 1$ to N determined in this way are accumulated and averaged for the total number of distance pulse value determination processes.

2. Method according to Claim 1, **characterized** in that the threshold value is designed to be $r_0 = 0.1 \text{ m/s}^3$.

3. Method according to one of the preceding claims, **characterized** in that the averaging from the distance pulse factors $w_i$ determined is carried out using the equation

$$\overline{w} = \frac{1}{N} \sum_{i=1}^{n} w_i$$

where i represents sequential numbers for the individual distance pulse values and N denotes the number of calculated distance pulse values.

4. Method according to one of the preceding claims, **characterized** in that a number k of averaged distance pulse factors are stored in the recording appliance, and are overwritten cyclically.

5. Method according to one of the preceding claims, **characterized** in that the differentiations of the measured values which are detected as the acceleration $a_l(t)$ in the longitudinal direction of the vehicle and as pulse strings $p(t)$ by the tachogenerator are carried out using a Savitzky-Golay filter.

**Revendications**

1. Procédé pour la détermination du nombre d'impulsions de distances parcourues d'un transmetteur tachymétrique avec utilisation des données d'un transmetteur d'accélérations, ledit transmetteur tachymétrique étant relié dans le véhicule à un enregistreur de données de véhicule, le transmetteur tachymétrique engendrant des trains d'impulsions proportionnels à la vitesse du véhicule et ledit enregistreur de données de véhicule étant équipé d'un transmetteur d'accélérations pour l'acquisition de l'accélération du véhicule dans le sens longitudinal de ce dernier, parallèlement à la surface de la piste de roulage,
    caractérisé par le fait

    a. qu'aux valeurs de mesure acquises de l'accélération $a_l(t)$ dans le sens longitudinal du véhicule est appliquée une différentiation simple et aux trains d'impulsions $p(t)$ transmis par le transmetteur tachymétrique une différentiation triple,
    b. que le nombre d'impulsions de distances parcourues w sera respectivement déterminé dans l'équation

$$\frac{da_l(t)}{dt} = \frac{1000}{w} \times \frac{d^3p(t)}{dt^3} .$$

    lorsque la valeur de montant

$$\left|\frac{da_l(t)}{dt}\right|$$

    est supérieure à une valeur de seuil $r_0$ prédéterminée,
    c. et que les valeurs d'impulsions de distances parcourues $w_i$ ainsi déterminées seront accumulées et moyennées avec $i = 1$ à N pour le nombre des déterminations d'impulsions de distances parcourues.

2. Procédé selon la revendication 1,
caractérisé par le fait
que la valeur de seuil est déterminée par $r_0$ = 0,1 m/s$^3$.

3. Procédé selon l'une quelconque des revendications précédentes,
caractérisé par le fait
que la formation de la valeur moyenne à partir des nombres d'impulsions de distances parcourues $w_i$ sera effectuée
selon l'équation

$$\overline{w} = \frac{1}{N} \sum_{i=1}^{N} w_i \quad ,$$

i numérotant les différentes valeurs d'impulsions de distances parcourues en série et N désignant le nombre des
valeurs d'impulsions de distances parcourues calculées.

4. Procédé selon l'une quelconque des revendications précédentes,
caractérisé par le fait
que, dans l'enregistreur, une quantité k des nombres d'impulsions de distances parcourues moyennés est mémorisée et cycliquement recouverte.

5. Procédé selon l'une quelconque des revendications précédentes,
caractérisé par le fait
que les différentiations des valeurs de mesure, qui sont acquises comme accélération $a_i(t)$ dans le sens longitudinal
du véhicule et comme trains d'impulsions p(t) par le transmetteur tachymétrique, seront effectuées avec un filtre
Savitzky-Golay.